# EUROPEAN PATENT SPECIFICATION

(11) **EP 4 642 818 B1**
(45) Date of publication and mention of the grant of the patent: **18.11.2026**
(21) Application number: 23847973.7
(22) Date of filing: 18.12.2023
(51) Int. Cl.: C08L 23/08, C08L 23/0807, C08F 210/02, C08F 210/16, C08F 4/659, C08J 5/18

(54) **PCR BLEND AND FILM**
PCR-MISCHUNG UND FILM
MÉLANGE ET FILM PCR

(30) Priority: 29.12.2022 US 202263477605 P; 28.02.2023 US 202363487463 P
(43) Date of publication of application: 05.11.2025
(73) Proprietor: Dow Global Technologies LLC, Midland, MI 48674 (US)
(72) Inventor: GARG, Akanksha, Freeport TX 77541 (US); ROGERS, Jessica L., Freeport TX 77541 (US); THURBER, Christopher M., Midland MI 48674 (US); PEREZ, Carmelo Declet, Freeport TX 77541 (US); MARTIN, Jill M., Freeport TX 77541 (US)
(74) Representative: Boult Wade Tennant LLP
(86) International application number: PCT/US2023/084519
(87) International publication number: WO 2024/145044

(56) References cited:
- EP-B1- 2 493 769
- WO-A1-2021/231244

## Description

### BACKGROUND

Known are polyethylene compositions for packaging applications, films, multilayer structures, and packaging articles made therefrom. For packaging applications, polyethylene compositions require a combination of toughness while exhibiting good tear strength. Balancing enhanced abuse performance (e.g., dart, puncture, and tear) without sacrificing overall material stiffness continues to be a general challenge in the field. Materials capable of achieving a better balance of packaging performance are increasingly needed as packaging design moves towards monomaterial structures to support packaging sustainability efforts.

In an effort to improve recyclability and expand sustainability, the flexible packaging market is moving toward the admixture of (i) "post-consumer recycled" (PCR) resin (plastic material that has been used and is subsequently recycled) with (ii) virgin plastic resin to produce PCR/virgin blend resin suitable for use in packaging applications. Such efforts reduce the amount of waste plastic sent to landfill.

However, PCR/virgin blend resins experience certain deficiencies. High gel content in films made from conventional PCR/virgin blend resins cause performance degradation and abrupt failure in the final applications. High gel content is also responsible for poor aesthetics in the final packaging. PCR/virgin blend resins also experience bubble stability issues during the blown film extrusion process, limiting the amount of PCR incorporation in the final film formulation. WO 2021/231244 A1 relates to collation shrink film and the preparation of such film.

The art recognizes the on-going need for plastic formulations with ever-increasing proportion of PCR resin in the final PCR/virgin blend resin, the PCR/virgin blend resin also maintaining properties (modulus, and impact and tear resistance) suitable for film and packaging applications.

### SUMMARY

In a first aspect, the present invention provides a composition. The composition includes (A) from 40 wt% to 70 wt% of a high density polyethylene post-consumer resin (HDPE-PCR), wherein the high density polyethylene post-consumer resin has (i) a density from 0.950 g/cc to 0.970 g/cc and a melt index from 0.2 g/10 min to 2.0 g/10 min; and (B) from 60 wt% to 30 wt% of a polyethylene enhancer. The polyethylene enhancer is an ethylene/C₄-C₈ α-olefin copolymer having (i) a density from 0.880 g/cc to 0.900 g/cc, (ii) a melt index from 0.5 g/10 min to 0.85 g/10 min, and (iii) an I₁₀/I₂ value from 5.5 to 8.0. (C) The composition has (1) a density from 0.910 g/cc to 0.935 g/cc, and (2) a melt index from 0.5 g/10 min to 0.85 g/10 min. In a further aspect the present invention also provides a film as described in claim 4, made from the composition.

### DESCRIPTION OF THE DRAWING

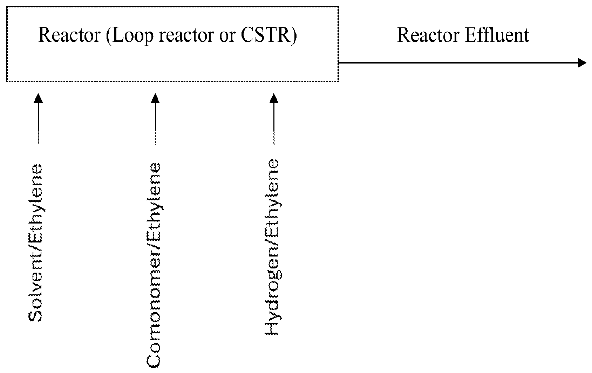

FIG. 1 is a schematic representation of a polymerization reactor system, in accordance with an embodiment of the present disclosure.

### DEFINITIONS

Any reference to the Periodic Table of Elements is that as published by CRC Press, Inc., 1990-1991. Reference to a group of elements in this table is by the new notation for numbering groups.

The numerical ranges disclosed herein include all values from, and including, the lower and upper value. For ranges containing explicit values *(e.g*., from 1 or 2, or 3 to 5, or 6, or 7), any subrange between any two explicit values is included *(e.g*., the range 1-7 above includes subranges of from 1 to 2; from 2 to 6; from 5 to 7; from 3 to 7; from 5 to 6; etc.).

Unless stated to the contrary, implicit from the context, or customary in the art, all parts and percents are based on weight and all test methods are current as of the filing date of this disclosure.

The terms "blend" or "polymer blend," as used, refers to a mixture of two or more polymers. A blend may or may not be miscible (not phase separated at molecular level). A blend may or may not be phase separated. A blend may or may not contain one or more domain configurations, as determined from transmission electron spectroscopy, light scattering, x-ray scattering, and other methods known in the art. The blend may be effected by physically mixing the two or more polymers on the macro level (for example, melt blending resins or compounding), or the micro level (for example, simultaneous forming within the same reactor).

The term "composition" refers to a mixture of materials which comprise the composition, as well as reaction products and decomposition products formed from the materials of the composition.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination.

An "ethylene-based polymer" is a polymer that contains more than 50 mole percent (wt%) polymerized ethylene monomer (based on the total amount of polymerizable monomers) and, optionally, may contain at least one comonomer. Ethylene-based polymer includes ethylene homopolymer, and ethylene copolymer (meaning units derived from ethylene and one or more comonomers). The terms "ethylene-based polymer" and "polyethylene" may be used interchangeably. Ethylene-based polymer may include ethylene copolymerized with an α-olefin (*i.e*., C₃-C₁₂ α-olefin, or C₄-C₈ α-olefin) and/or unsaturated ester.

The term "ethylene monomer," or "ethylene," as used herein, refers to a chemical unit having two carbon atoms with a double bond there between, and each carbon bonded to two hydrogen atoms, wherein the chemical unit polymerizes with other such chemical units to form an ethylene-based polymer composition.

A "heteroatom" is an atom other than carbon or hydrogen. The heteroatom can be a non-carbon atom from Groups IV, V, VI and VII of the Periodic Table. Nonlimiting examples of heteroatoms include: F, N, O, P, B, S, and Si.

A "hydrocarbon" is a compound containing only hydrogen atoms and carbon atoms. A "hydrocarbonyl" (or "hydrocarbonyl group") is a hydrocarbon having a valence (typically univalent). A hydrocarbon can have a linear structure, a cyclic structure, or a branched structure.

"Linear low density polyethylene" (or "LLDPE") is a linear ethylene/α-olefin copolymer containing heterogeneous short-chain branching distribution comprising units derived from ethylene and units derived from at least one C₃-C₁₀ α-olefin comonomer or at least one C₄-C₈ α-olefin comonomer, or at least one C₆-C₈ α-olefin comonomer. LLDPE is characterized by little, if any, long chain branching, in contrast to conventional LDPE. LLDPE has a density from 0.910 g/cc, or 0.915 g/cc, or 0.920 g/cc, or 0.925 g/cc to 0.930 g/cc, or 0.935 g/cc, or 0.940 g/cc. Nonlimiting examples of LLDPE include TUFLIN^{™} linear low density polyethylene resins and DOWLEX^{™} polyethylene resins, each available from the Dow Chemical Company; and MARLEX^{™} polyethylene (available from Chevron Phillips).

"Low density polyethylene" (or "LDPE") consists of ethylene homopolymer, or ethylene copolymer with acrylate, vinyl acetate, and/or vinyl silane as comonomer, the LDPE has a density from 0.915 g/cc to 0.940 g/cc and contains long chain branching with broad molecular weight distribution (MWD). LDPE is typically produced by way of high pressure free radical polymerization (tubular reactor or autoclave with free radical initiator). Nonlimiting examples of LDPE include MarFlex^{™} (Chevron Phillips), LUPOLEN^{™} (LyondellBasell), as well as LDPE products from Borealis, Ineos, ExxonMobil, and others.

"Medium density polyethylene" (or "MDPE") is an ethylene homopolymer, or an ethylene/α-olefin copolymer comprising at least one C₃-C₁₀ α-olefin, or a C₃-C₄ α-olefin, that has a density from 0.926 g/cc to 0.940 g/cc.

An "olefin" is an unsaturated, aliphatic hydrocarbon having a carbon-carbon double bond.

An "olefin-based polymer" (interchangeably referred to as "polyolefin") is a polymer that contains a majority weight percent of polymerized olefin monomer (based on the total amount of polymerizable monomers), and optionally, may contain at least one comonomer. Nonlimiting examples of olefin-based polymer include ethylene-based polymer and propylene-based polymer.

The term "polymer" or a "polymeric material," as used herein, refers to a compound prepared by polymerizing monomers, whether of the same or a different type, that in polymerized form provide the multiple and/or repeating "units" or "mer units" that make up a polymer. The generic term polymer thus embraces the term homopolymer, usually employed to refer to polymers prepared from only one type of monomer, and the term copolymer, usually employed to refer to polymers prepared from at least two types of monomers. It also embraces all forms of copolymer, e.g., random, block. The terms "ethylene/α-olefin polymer" and "propylene/α-olefin polymer" are indicative of copolymer as described above prepared from polymerizing ethylene or propylene respectively and one or more additional, polymerizable α-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to as being based on "units" that are the polymerized form of a corresponding monomer.

A "propylene-based polymer" is a polymer that contains more than 50 mole percent polymerized propylene monomer (based on the total amount of polymerizable monomers) and, optionally, may contain at least one comonomer. Propylene-based polymer includes propylene homopolymer, and propylene copolymer (meaning units derived from propylene and one or more comonomers). The terms "propylene-based polymer" and "polypropylene" may be used interchangeably. A nonlimiting example of a propylene-based polymer (polypropylene) is a propylene/α-olefin copolymer with at least one C₂ or C₄-C₁₀ α-olefin comonomer.

### TEST METHODS

Dart impact. Dart impact is measured in accordance with ASTM D1709. Results are reported in impact failure weight grams (g).

Defect Count is a measure of defects that are detected in an extruded film using optical imaging technology in accordance with ASTM D7310-20 "Standard Practice for Defect Detection and Rating of Plastic Film Using Optical Sensors." The Defect Count is reported as the area of optical defects (in mm²) per 24.6 cm³ film with an effective circular diameter within defined series of ranges: 400-800µm, 800-1600µm, 1600µm and above. It is measured by an Optical Control Systems Film Surface Analyzer FSA100 (OCS FSA100) optical imaging system. The OCS FSA100 optical imaging system consists of a lighting unit, a CCD line scan camera, and a computer with image/data analysis software version 10.4.1.7.

The OCS FSA100 optical imaging system detects defects as they obscure the transmission of halogen-based source light. Average greyscale was set to 170 with a threshold sensitivity setting of 35%. Additionally, the gain of the CCD system may be adjusted to compensate for film haziness. The imaging system creates a composite area of each defect by adding the defective pixels from each subsequent line scan. The system then reports the area of defects which were in user defined size ranges, based on the diameter of circles having equivalent areas.

Blown films 50.8 µm (2 mil) thick were produced for Defect Counts as follows. Gravimetric feeders dosed resin formulations into a Labtech LTE20-32 twin screw extruder at rate of 6.8 kg/hr (15 lbs/hr). From the extruder the resin formulation is conveyed into the 5.1 cm (2") die diameter die with gap of 1.0 mm. The LTE feed throat was set to 193°C and the remaining barrel, conveying portion, and die temperature were set and maintained to 215°C. Pressurized ambient air inflated the film bubble to a 2.5 blow-up ratio. A dual lip air ring driven by a variable speed blower is used for all experiments. The frost line height (FLH) was maintained between 22.4 and 27.4 cm (8.8 and 10.8 inches). Film thickness was targeted at 50.8 µm (2 mils) and was controlled within ± 15% by adjusting the nip roller speed. The films are wound up into a roll.

Density is measured in accordance with ASTM D792, Method B. Results are reported in grams per cubic centimeter (g/cc).

Limonene content. Limonene content is measured by headspace gas chromatography. Results are reported in parts per million (or "ppm").

Melt Index. The term "melt index," or "MI" as used herein, refers to the measure of how easily a thermoplastic polymer flows when in a melted state. Melt index, or I₂, is measured in accordance by ASTM D 1238, Condition 190°C/2.16 kg, and is reported in grams eluted per 10 minutes (g/10 min). The I₁₀ is measured in accordance with ASTM D 1238, Condition 190°C/10 kg, and is reported in grams eluted per 10 minutes (g/10 min).

2% Secant Modulus. Secant modulus was measured as described here. The film sample is conditioned per ASTM standards for at least 40 hours at 23 °C (± 2 °C) and 50% R.H (± 10 %) before the test which is conducted at 23 °C (± 2 °C) and 50% R.H (± 10 %) per ASTM standards. Film strips of dimension 2.5 cm (1") wide by 20.3 cm (8") long are cut from a film in the desired direction (machine (MD) and the cross directions (CD)). The specimens are loaded onto a tensile testing frame using line grip jaws (flat rubber on one side of the jaw and a line grip on the other) set at a gauge length of 10.2 cm (4"). The specimens are then strained at a crosshead speed of 5.1 cm/min (2 in./min) up to a nominal strain of 5%. The secant modulus is measured at a specified strain and is the ratio of the stress at the specified strain to the specified strain, as determined from the load -extension curve. Typically, secant modulus at 1% and 2% strain are calculated. Five replicates are typically tested for each sample. Secant moduli results are reported in MPa (ksi (1000 psi)).

Tear--machine direction (MD). The Elmendorf Tear test determines of the average force to propagate tearing through a specified length of plastic film or nonrigid sheeting after the tear has been started, using an Elmendorf-type tearing tester. The film is conditioned for at least 40 hours at 23 °C (+/- 2 °C) and 50% R.H (+/- 10) as per ASTM standards. Standard testing conditions are 23 °C (+/- 2 °C) and 50% R.H (+/- 10) as per ASTM standards. The force in grams required to propagate tearing across a film or sheeting specimen is measured using a precisely calibrated pendulum device. Acting by gravity, the pendulum swings through an arc, tearing the specimen from a precut slit. The specimen is held on one side by the pendulum and on the other side by a stationary member. The loss in energy by the pendulum is indicated by a pointer or by an electronic scale. The scale indication is a function of the force required to tear the specimen. The sample used is the 'constant radius geometry' as specified in ASTM D1922. Testing is carried out on samples that have been cut in the MD direction. Prior to testing, the sample thickness is measured at the sample center. A total of 15 specimens are tested and average tear strength reported. Samples that tear at an angle greater than 60° from the vertical are described as 'oblique' tears - such tears should be noted, though the strength values are included in the average strength calculation. Tear resistance results are reported in gram-force (gf).

### DETAILED DESCRIPTION

The present disclosure provides a polyethylene composition. The polyethylene composition includes (A) from 40 wt% to 70 wt% of a high density polyethylene post-consumer resin (HDPE-PCR). The polyethylene composition also includes (B) from 60 wt% to 30 wt% of a polyethylene enhancer having (i) a density from 0.88 g/ccc to 0.90 g/cc, (ii) a melt index from 0.5 g/10 min to 0.85 g/10 min, and an I₁₀/I₂ value from 5.5 to 8.0. The polyethylene composition (C) has (1) a density from 0.910 g/cc to 0.935 g/cc, (2) a melt index from 0.5 g/10 min to 0.85 g/10 min.

The present polyethylene composition includes (A) from 40 wt% to 70 wt% of a high density polyethylene post-consumer resin. A "high density polyethylene," as used herein is an ethylene/C₄-C₈ α-olefin copolymer having a density from 0.95 g/cc to 0.97 g/cc and a melt index from 0.2 g/10 min to 2.0 g/10 min.

The high density polyethylene has
(i) a density from 0.950 g/cc to 0.970 g/cc, or from 0.955 g/cc to 0.970 g/cc; and
(ii)a melt index from 0.2 g/10 min to 2.0 g/10 min, or from 0.3 g/10 min to 1.2 g/ 10 min.

The high density polyethylene is a high density polyethylene post-consumer resin, or "HDPE-PCR." The term "post-consumer resin" (or "PCR") refers to a polymeric material that has been previously used as consumer packaging or industrial packaging. In other words, PCR is waste plastic. PCR is typically collected from recycling programs and recycling plants. PCR typically requires additional cleaning and processing before it can be re-introduced into a manufacturing line. The PCR may include one or more of an ethylene-based polymer, a propylene-based polymer, a polyester, a poly(vinyl chloride), a polystyrene, an acrylonitrile butadiene styrene, a polyamide, an ethylene vinyl alcohol, an ethylene vinyl acetate, or a polyvinyl chloride. The PCR may include one or more contaminants. The contaminants may be the result of the polymeric material's use prior to being repurposed for reuse. In some embodiments, contaminants may include paper, ink, food residue, pigments, dyes, process aids, stabilizing additives (e.g., antioxidants), fillers, flame retardants, other performance additives, odors (limonene), surface prints, paper labels, adhesives for labels, dirt, volatile organic compounds, non-volatile organic compounds or other recycled materials in addition to the polymer, which may result from the recycling process. The contaminant may be particulate *(e.g.,* fillers, dirt, particulate pigments) or non-particulate *(e.g.,* dyes, odors, surfactants, volatile organic compounds) It is understood PCR is different from post-industrial recycle (PIR) resin in that the latter has not reached consumer. It is understood that similar principles described herein for PCR would also apply to PIR resins.

PCR is distinct from virgin polymeric material. Since PCR has gone through an initial heat and molding process; PCR is not "virgin" polymeric material. A "virgin polymeric material" is a polymeric material that has not undergone, or otherwise has not been subject to, a heat process or a molding process other than those related to the initial manufacture of pellets or granules. The physical, chemical and flow properties of PCR resin differ when compared to virgin polymeric resin.

The PCR is a high density polyethylene-PCR ("HDPE-PCR"). Nonlimiting examples of sources for HDPE-PCR include rigid HDPE packaging such as bottles (milk jugs, juice containers), and flexible HDPE packaging such as stand-up pouches and t-shirt bags. HDPE-PCR also includes residue from its original use, residue such as paper, adhesive, ink, ethylene vinyl alcohol (EVOH), polyamide (PA), polyethylene terephthalate (PET), and other odor causing agents. The HDPE-PCR has:
(i) a density from 0.950 g/cc to 0.970 g/cc, or from 0.955 g/cc to 0.970 g/cc; and
(ii)a melt index from 0.2 g/10 min to 2.0 g/10 min, or from 0.3 g/10 min to 1.2 g/ 10 min.

Nonlimiting examples of suitable HDPE-PCR include PCR sold by Envision Plastics, North Carolina, USA, under the names EcoPrime^{™}, PRISMA^{™}, Natural HDPE PCR Resins, Mixed Color and Black HDPE PCR Resins; PCR sold by KW Plastics, Alabama, USA under the following names KWR101-150, KWR102-8812 BLK, KWR102, KWR105-7525, KWR-105M2, and KWR105M4.

The polyethylene composition includes (B) a polyethylene enhancer. A "polyethylene enhancer," as used herein, is an ethylene-based polymer from the group of single-site catalyzed linear low density polyethylene, including both linear and substantially linear low density resins (m-LLDPE); ethylene-based plastomers (POP) and ethylene-based elastomers (POE). The polyethylene enhancer is an ethylene/C₄-C₈ α-olefin copolymer having (i) a density from 0.880 g/cm³ to 0.900 g/cm³, (ii) a melt index from 0.5 g/10 minutes to 0.85 g/10 minutes, and (iii) an I₁₀/I₂ value from 5.5 to 8.0.

The polyethylene composition (interchangeably referred to as "composition") includes:
(A) from 40 wt% to 70 wt% of the high density polyethylene post-consumer resin (HDPE-PCR); and
(B) from 60 wt% to 30 wt% of the polyethylene enhancer having
   (i) a density from 0.880 g/ccc to 0.900 g/cc,
   (ii) a melt index from 0.5 g/10 min to 0.85 g/10 min, and
   (iii) an I₁₀/I₂ value from 5.5 to 8.0, and
(C) the polyethylene composition has
   (1) a density from 0.910 g/cc to 0.935 g/cc, and
   (2) a melt index from 0.5 g/10 min to 0.85 g/10 min.

The polyethylene composition includes
(A) from 40 wt% to 70 wt%, or from 42 wt% to 65 wt%, or from 42 wt% to 60 wt% of the HDPE-PCR, the HDPE-PCR having
   (i) a density from 0.950 g/cm³ to 0.970 g/cm³, or from 0.955 g/cm³ to 0.970 g/cm³, and/or
   (ii) a melt index from 0.2 g/10 min to 2.0 g/10 min, or from 0.3 g/10 min to 1.0 g/10 minutes, and
(B) from 60 wt% to 30 wt%, or from 58 wt% to 35 wt%, or from 58 wt% to 40 wt% of the polyethylene enhancer, the polyethylene enhancer is an ethylene/C₄-C₈ α-olefin copolymer having
   (i) a density from 0.880 g/cm³ to 0.900 g/cm³, or from 0.882 g/cm³to 0.898 g/cm³,
   (ii) a melt index from 0.5 g/10 minutes to 0.85 g/10 minutes,
   (iii) an I₁₀/I₂ value from 5.5 to 8.0, or from 6.0 to 8.0, and the
   polyethylene composition has
   (1) a density from 0.910 g/cc to 0.935 g/cc, and
   (2) a melt index (I₂) from 0.5 g/10 min to 0.85 g/10 min (hereafter *composition1).*

The polyethylene composition is subjected to a devolatilization procedure to reduce, or eliminate, the limonene content. The polyethylene composition has a limonene content less than 4ppm, or 0 ppm, or from greater than 0 ppm to less than 4 ppm, or from 0.1 ppm to 3 ppm, or from 0.5 ppm to 2.5 ppm.

In an embodiment, *composition)* has a limonene content less than 4 ppm, or from 0 ppm to less than 4 ppm, or from 0.1 ppm to 3 ppm, or from 0.5 ppm to 2.5 ppm.

The polyethylene composition may include one or more optional additives. Nonlimiting examples of suitable additives include, but are not limited to, antistatic agents, color enhancers, dyes, lubricants, fillers (for example, TiO₂ or CaCO₃), opacifiers, nucleators, processing aids, pigments, primary antioxidants, secondary anti-oxidants, UV stabilizers, anti-blocks, slip agents, tackifiers, fire retardants, anti-microbial agents, odor reducer agents, anti-fungal agents, and combinations thereof. The present polyethylene composition may include from 0.001 to 10 weight (wt) percent, or from 0.01 wt% to 1 wt%, or from 0.1 wt% to 0.5 wt%, by the combined weight of such additives, based on the total weight of the polyethylene composition including such additives.

The present disclosure provides a film. In an embodiment, the film is composed of the polyethylene composition. The polyethylene composition is composed of
(A) from 40 wt% to 70 wt% of a post-consumer recycled high density polyethylene (PCR HDPE); and
(B) from 60 wt% to 30 wt% of a polyethylene enhancer having
   (i) a density from 0.880 g/ccc to 0.900 g/cc,
   (ii) a melt index from 0.5 g/10 min to 0.85 g/10 min, and
   (iii) an l₁₀/l₂ value from 5.5 to 8.0, and
(C) the polyethylene composition has
   (1) a density from 0.910 g/cc to 0.935 g/cc, and
   (2) a melt index from 0.5 g/10 min to 0.85 g/10 min.

In an embodiment, the film is composed of *composition 1.*

The film is a blown film or a cast film. The film is a monolayer film, or one or more layers in a multilayer film.

In an embodiment, the film is a monolayer film. In a further embodiment, the film is a monolayer blown film.

In an embodiment, the film is a layer in a multilayer film. The multilayer film can have 2, or 3, or 4, or 5, or 6, or 7, or 8, or 9, or 10, or 11 layers.

Films of the present disclosure can have a variety of thicknesses. In an embodiment, the film is a blown film and the blown film has a thickness from 6.35 µm (0.25 mils), or 12.7 µm (0.5 mils), or 17.8 µm (0.7 mils), or 25.4 µm (1.0 mil), or 44.5 µm (1.75 mils), or 50.8 µm (2.0 mils) to 101.6 µm (4.0 mils), or 152.4 µm (6.0 mils), or 203.2 µm (8.0 mils), or 254 µm (10 mils), or 381 µm (15 mils).

It is understood that any of the foregoing films/layers can further include one or more additives. Nonlimiting examples of suitable additives include antioxidants, ultraviolet light stabilizers, thermal stabilizers, slip agents, antiblock, pigments or colorants, processing aids, crosslinking catalysts, flame retardants, fillers and foaming agents. In an embodiment, the film includes 0 wt%, or greater than 0 wt%, or 1 wt%, to 1.5 wt%, or 2 wt%, or 2.5 wt%, or 3 wt% total additives based on total weight of the film.

In an embodiment, the film includes a layer formed from the present polyethylene composition that is laminated to another film.

The present film can be corona treated and/or printed *(e.g.,* reverse or surface printed).

In an embodiment, the present film is oriented, uniaxially *(e.g.,* in the machine direction) or biaxially *(e.g.,* in the machine direction and in the cross direction).

In an embodiment, the film has a thickness from 38.1 µm (1.5 mils) to 63.5 µm (2.5 mils), or from 43.2 µm (1.7 mils) to 58.4 µm (2.3 mils) or 50.8 µm (2.0 mils). The film is composed of the polyethylene composition.

In an embodiment, the film is composed of the polyethylene composition. The polyethylene composition includes
(A) from 40 wt% to 70 wt%, or from 42 wt% to 65 wt%, or from 42 wt% to 60 wt% of the HDPE-PCR, the HDPE-PCR having
   (i) a density from 0.950 g/cm³ to 0.970 g/cm³, or from 0.955 g/cm³ to 0.970 g/cm³, and
   (ii) a melt index from 0.2 g/10 min to 2.0 g/10 min, or from 0.3 g/10 min to 1.0 g/10 minutes (B) from 60 wt% to 30 wt%, or from 58 wt% to 35 wt%, or from 58 wt% to 40 wt% of the polyethylene enhancer, the polyethylene enhancer is an ethylene/C₄-C₈ α-olefin copolymer having
      (i) a density from 0.880 g/cm³ to 0.900 g/cm³, or from 0.882 g/cm³to 0.898 g/cm³,
      (ii) a melt index from 0.5 g/10 minutes to 0.85 g/10 minutes, and
      (iii) an I₁₀/I₂ value from 5.5 to 8.0, or from 6.0 to 8.0, and
      the polyethylene composition has
      (1) a density from 0.910 g/cc to 0.935 g/cc, and
      (2) a melt index (I₂) from g/10 minutes 0.5 g/10 min to 0.85 g/10 min *(composition1),*
      and the film has one, some, or all of the following properties:
      a machine direction tear strength from 4.41 N (450 gf) to 8.83 N (900 gf), or from 4.61 N (470 gf) to 8.83 N (900 gf), or from 4.71 N (480 gf) to 8.83 N (900 gf), and/or
      a machine direction 2% secant modulus from 310.3 MPa (45,000 psi) to 413.7 MPa (60,000 psi), or from 324.1 MPa (47,000 psi) to 413.7 MPa (60,000 psi), or from 330.9 MPa (48,000 psi) to 413.7 MPa (60,000 psi) and/or
         a dart impact strength from 600 g to 1000 g, or from 620 g from 990 g; and/or
         a limonene content less the 4 ppm, or 0 ppm, or from greater than 0 ppm to less than 4 ppm, or from 0.1 ppm to 3 ppm, or from 0.5 ppm to 2.5 ppm, and/or
         a defect count (at 400 µm - 800 µm range) from 50.0 mm² to 120 mm², or from 55.0 mm² to 115 mm², or from 58.0 mm² to 112 mm².

By way of example, and not limitation, some embodiments of the present disclosure will now be described in detail in the following Examples.

### EXAMPLES

Materials used in the comparative samples (CS) and in the inventive examples (1E) are provided in Tables 1A and 1B below.

**Table 1A - Properties for reference resins**

| Material | Properties | Density [g/cc] | Melt index, I₂ [g/10 min] | I₁₀/I₂ | Source |
|---|---|---|---|---|---|
| Ref 1 | Dowlex GM8070 | 0.917 | 0.90 | 7.7 | Dow Chemical |
| Ref 2 | Innate ST50 | 0.935 | 0.85 | 8 | Dow Chemical |
| Ref3 | Engage 8150 | 0.868 | 0.5 | 7.75 | Dow Chemical |
| Ref4 | Attane 4203 | 0.905 | 0.8 | 8.7 | Dow Chemical |
| Ref5 | Attane 4201G | 0.912 | 1.0 | 8.2 | Dow Chemical |
| Ref6 | Engage 8003 | 0.885 | 1 | 7.4 | Dow Chemical |
| Ref7 | Affinity PF 1140G | 0.8965 | 1.6 | 9.7 | Dow Chemical |
| Ref8 | Avangard 100 (PCR) | 0.914 | 1.8-2.8 | | |

### A. High Density Polyethylene - Post Consumer Resin (HDPE-PCR)

**Table 1B - Properties for high density polyethylene component (A)**

| Material | Properties | Density [g/cc] | Melt index, I₂ [dg/min] | Source |
|---|---|---|---|---|
| PCR-HDPE1 | FDA NOL HDPE PCR Envision Ecoprime PCR | 0.963 | 0.6 | Envision Plastics |
| PCR-HDPE2 | (no FDA NOL) HDPE PCR | 0.958 | 0.68 | Talco PCR |
| PCR-HDPE3 | (no FDA NOL) HDPE PCR Envision 9607PS | 0.96 | 0.7 | Envision Plastics |

### B. Polyethylene Enhancer and Polymerization

All raw materials (ethylene and 1-octene) and the process solvent (a narrow boiling range high-purity isoparaffinic solvent, Isopar-E) are purified with molecular sieves before introduction into the reaction environment. Hydrogen is supplied pressurized as a high purity grade and is not further purified. The reactor monomer feed stream is pressurized via a mechanical compressor to above reaction pressure. The solvent and comonomer feed are pressurized via a pump to above reaction pressure. The individual catalyst components are manually batch diluted with purified solvent and pressured to above reaction pressure. All reaction feed flows are measured with mass flow meters and independently controlled with computer automated valve control systems.

For Enhancer 1 and Enhancer A, a single reactor system is used. The continuous solution polymerization reactor consists of a liquid full, non-adiabatic, isothermal, circulating, loop reactor which mimics a continuously stirred tank reactor (CSTR) with heat removal. Independent control of all fresh solvent, monomer, comonomer, hydrogen, and catalyst component feeds is possible. The total fresh feed stream to the reactor (solvent, monomer, comonomer, and hydrogen) is temperature controlled to maintain a single solution phase by passing the feed stream through a heat exchanger. The total fresh feed to the polymerization reactor is injected into the reactor at two locations with approximately equal reactor volumes between each injection location. The fresh feed is controlled with each injector receiving half of the total fresh feed mass flow.

The catalyst components are injected into the polymerization reactor through injection stingers. The primary catalyst component feed is computer controlled to maintain the reactor monomer conversion at the specified target. The cocatalyst components are fed based on calculated specified molar ratios to the primary catalyst component. Immediately following the reactor feed injection location, the feed streams are mixed with the circulating polymerization reactor contents with static mixing elements. The contents of the reactor are continuously circulated through heat exchangers responsible for removing much of the heat of reaction and with the temperature of the coolant side responsible for maintaining an isothermal reaction environment at the specified temperature. Circulation around the reactor loop is provided by a pump.

The reactor effluent enters a zone where it is deactivated with the addition of and reaction with a suitable reagent (water). At this same reactor exit location other additives are added for polymer stabilization. The additives are Octadecyl 3,5-Di-Tert-Butyl-4-Hydroxyhydrocinnamate, Tetra kis(Methylene(3,5-Di-Tert-Butyl-4 Hydroxyhydrocinnamate))Methane, and Tris(2,4-Di-Tert-Butyl-Phenyl) Phosphite.

Following catalyst deactivation and additive addition, the reactor effluent enters a devolatization system where the ethylene/octene copolymer is removed from the non-polymer stream. The isolated ethylene/octene copolymer melt is pelletized and collected. The non-polymer stream passes through various pieces of equipment which separate most of the ethylene which is removed from the system. Most of the solvent and unreacted comonomer is recycled back to the reactor after passing through a purification system. A small amount of solvent and comonomer is purged from the process. The catalyst components and co-catalysts are provided in Table 2 below. The polymerization conditions for Enhancer 1 and Enhancer A are provided in Table 3A below.

Enhancer 2, Enhancer 3, Enhancer B, and Enhancer 4, are prepared according to the following process. All raw materials (monomer and comonomer) and the process solvent (a narrow boiling range high-purity isoparaffinic solvent, Isopar-E) are purified with molecular sieves before introduction into the reaction environment. Hydrogen is supplied pressurized as a high purity grade and is not further purified. The reactor monomer feed stream is pressurized via a mechanical compressor to above reaction pressure. The solvent feed is pressurized via a pump to above reaction pressure. The comonomer feed is pressurized via a pump to above reaction pressure. The individual catalyst components are manually batch diluted with purified solvent and pressured via individual pumps to above reaction pressure. All reaction feed flows other than the catalyst components are measured with mass flow meters and independently controlled with computer automated valve control systems. The catalyst components are measured with mass flow meters and independently controlled with computer automated metering pumps.

Reactor configuration is to use either a continuous solution polymerization reactor consisting of a liquid full, non-adiabatic, isothermal, circulating, loop reactor with heat removal (loop reactor) or a continuous solution polymerization reactor consisting of a liquid full, adiabatic, continuously stirred tank reactor (CSTR). The reactor configuration used for Enhancer 2, Enhancer 3, Enhancer B, and Enhancer 4 is shown in FIG. 1.

For the loop reactor configuration, independent control of all fresh solvent, monomer, comonomer (if present), hydrogen, and catalyst component feeds is possible. The total fresh feed stream to each reactor (solvent, monomer, comonomer [if present], and hydrogen) is temperature controlled, typically between 15-50°C to maintain a single solution phase, by passing the feed stream through a heat exchanger. The total fresh feed is injected into the reactor at two locations with approximately equal reactor volumes between each injection location. The fresh feed is controlled with each injector receiving half of the total fresh feed mass flow. The catalyst components are injected into the polymerization reactor separate from the other feeds. The primary catalyst component feed is computer controlled to maintain the reactor monomer conversion at the specified values. The cocatalyst component(s) is/are fed based on calculated specified molar ratios to the primary catalyst component. Immediately following each feed injection location, the feed streams are mixed with the circulating polymerization reactor contents with static mixing elements. The contents of loop reactor are continuously circulated through heat exchangers responsible for removing much of the heat of reaction with the temperature of the coolant side responsible for maintaining an isothermal reaction environment at the specified temperature. Circulation around the first reactor loop is provided by a pump.

For the CSTR configuration, independent control of all fresh solvent, monomer, comonomer (if present), hydrogen, and catalyst components feeds is possible. The total fresh feed stream to each reactor (solvent, monomer, comonomer [if present], and hydrogen) is temperature controlled, typically between 15-50°C to maintain a single solution phase, by passing the feed stream through a heat exchanger. The total fresh feed is injected into the reactor at one location. The catalyst components are injected into the polymerization reactor separate from the other feeds. The primary catalyst component feed is computer controlled to maintain the reactor monomer conversion at the specified values. The cocatalyst component(s) is/are fed based on calculated specified molar ratios to the primary catalyst component. An agitator in the reactor is responsible for continuously mixing of the reactants. An oil bath provides for some fine tuning of the reactor temperature control.

In both reactor configurations, the reactor effluent enters a zone where it is deactivated with the addition of and reaction with a suitable reagent (typically water). At this same reactor exit location other additives are added for polymer stabilization (typical antioxidants suitable for stabilization during extrusion and fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl) Phosphite and acid scavenging agents like calcium stearate if needed).

Following catalyst deactivation and additive addition, the reactor effluent enters a devolatization system where the polymer is removed from the non-polymer stream. The isolated polymer melt is pelletized and collected. The non-polymer stream is removed from the system.

The catalyst components and co-catalysts are provided in Table 2 below.

**Table 2**

| | |
|---|---|
| Catalyst component 1 | 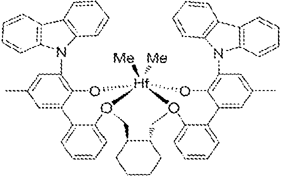 |
| Catalyst component 2 | 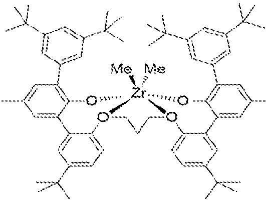 |
| Co-catalyst 1 | bis(hydrogenated tallow alkyl)methylammonium tetrakis(pentafluorophenyl)borate(1-) ("Co-Cat1") |
| Co-catalyst 2 | Modified methyl aluminoxane ("Co-Cat2") |

The polymerization conditions for Enhancer 1 and Enhancer A are provided in Table 3A below. The polymerization conditions for Enhancer 2, Enhancer 3, Enhancer B, and Enhancer 4 are provided in Table 3B below.

**Table 3A -- Polymerization conditions for Enhancer 1, Enhancer A**

| | Enhancer 1 (Ethylene/Octene Copolymer 1) | Enhancer A (Ethylene/Octene Copolymer 2) |
|---|---|---|
| Reactor Configuration (type) | Single | Single |
| Comonomer type (type) | 1-octene | 1-octene |
| Reactor Feed Solvent / Ethylene Mass Flow Ratio (g/g) | 4.27 | 3.60 |
| Reactor Feed Comonomer / Ethylene Mass Flow Ratio (g/g) | 0.420 | 0.627 |
| Reactor Feed Hydrogen / Ethylene Mass Flow Ratio (g/g) | 5.42E-04 | 1.48E-04 |
| Reactor Temperature (°C) | 145 | 160 |
| Reactor Pressure (barg) | 50 | 50 |
| Reactor Ethylene Conversion (%) | 85.5 | 90.4 |
| Reactor Primary Catalyst Type (type) | Catalyst component 1 | Catalyst component 2 |
| Reactor Co-Catalyst 1 Type (type) | Co-catalyst 1 | Co-catalyst 1 |
| Reactor Co-Catalyst 2 Type (type) | Co-catalyst 2 | Co-catalyst 2 |
| Reactor Co-Catalyst 1 to Catalyst Molar Ratio (B to Catalyst Metal ratio) (mol/mol) | 2.0 | 1.4 |
| First Reactor Co-Catalyst 2 to Catalyst Molar Ratio (Al to Catalyst Metal ratio) (mol/mol) | 29.9 | 9.9 |
| Reactor Residence Time (min) | 7.1 | 6.9 |

**Table 3B-Polymerization conditions for Enhancer 2, Enhancer 3, Enhancer B, and Enhancer 4**

| | | Enhancer 2 | Enhancer 3 | Enhancer B | Enhancer 4 |
|---|---|---|---|---|---|
| Reactor Configuration | Type | Single Loop | Single Loop | Single CSTR | Single CSTR |
| Comonomer type | Type | 1-octene | 1-octene | 1-octene | 1-octene |
| First Reactor Feed Solvent / Ethylene Mass Flow Ratio | g/g | 3.7 | 3.5 | 6.4 | 7.8 |
| First Reactor Feed Comonomer / Ethylene Mass Flow Ratio | g/g | 0.83 | 0.68 | 0.59 | 0.63 |
| First Reactor Feed Hydrogen / Ethylene Mass Flow Ratio | g/g | 1.3E-04 | 1.5E-04 | 6.6E-05 | 3.6E-04 |
| First Reactor Temperature | °C | 165 | 165 | 198 | 145 |
| First Reactor Pressure | barg | 45 | 45 | 45 | 45 |
| First Reactor Ethylene Conversion | % | 86.7 | 86.1 | 92.7 | 77.2 |
| First Reactor Catalyst Type | Type | Catalyst component 2 | Catalyst component 2 | Catalyst component 2 | Catalyst component 1 |
| First Reactor Co-Catalyst 1Type | Type | Co-Cat 1 | Co-Cat 1 | Co-Cat 1 | Co-Cat 1 |
| First Reactor Co-Catalyst 2 Type | Type | Co-Cat 2 | Co-Cat 2 | Co-Cat 2 | Co-Cat 2 |
| First Reactor Co-Catalyst 1 to Catalyst Molar Ratio | Ratio | 1.2 | 1.1 | 1.2 | 1.2 |
| First Reactor Co-Catalyst 2 to Catalyst Molar Ratio | Ratio | 10.1 | 19.7 | 9.9 | 9.9 |
| First Reactor Residence Time | min | 12.7 | 12.6 | 11.1 | 8.1 |
| Percentage of Total Ethylene Feed to First Reactor | wt% | 100.0% | 100.0% | 100.0% | 100.0% |

The properties for polyethylene enhancer ("enhancer") are provided in Table 4 below.

**Table 4 - Properties for polyethylene enhancer component (B)**

| Material | Density (g/cc) | MI (g/10 min) | I₁₀/I₂ | Source |
|---|---|---|---|---|
| Enhancer1 | 0.898 | 0.54 | 6.4 | Dow Chemical |
| EnhancerA | 0.905 | 0.5 | 7.93 | Dow Chemical |
| Enhancer2 | 0.885 | 0.5 | 7.86 | Dow Chemical |
| Enhancer3 | 0.892 | 0.5 | 7.59 | Dow Chemical |
| EnhancerB | 0.892 | 0.5 | 11.07 | Dow Chemical |
| Enhancer4 | 0.892 | 0.5 | 5.92 | Dow Chemical |

### C. Polyethylene Composition

Individual pellet components were fed into the hopper with gravimetric feeders. Gravimetric feeders dosed resin formulations into a Labtech LTE20-32 twin screw extruder at rate of 6.8 kg/hr (15 lbs/hr). From the extruder the resin formulation is conveyed into the blown film die. The LTE feed throat was set to 193 °C and the remaining barrel, conveying portion, and die temperature were set and maintained to 215 °C. Monolayer blown films having a target thickness of 50.8 µm (2.0 mils) were produced from the 5.1 cm (2") die diameter blown film line with a 1.0 mm die gap. To produce films an output rate of 0.43 kg/hr/cm (2.4 lb/hr/in). of die circumference was targeted with pressurized ambient air inflating the film bubble to a 2.5 blow-up ratio. A dual lip air ring driven by a variable speed blower is used for all experiments. The frost line height (FLH) was maintained between 23.6 cm and 26.2 (9.3 and 10.3 inches). Film thickness was targeted at 50.8 µm (2 mils) and was controlled within ± 10% by adjusting the nip roller speed. The films are wound up into a roll. Properties for inventive films and comparative films are provided in Table 5 below. Defect count in Table 5 is in the range of 400 µm to 800 µm. Weight percents in Table 5 are based on total weight of the film.

**Table 5 - Film properties**

| | %Enhancer // %PCR | d | MI | Limonene (ppm) | Dart (g) | MD Tear (N) ((gf)) | MD Secant Mod (MPa) ((psi)) | Defect count, 400-800 µm (mm²) |
|---|---|---|---|---|---|---|---|---|
| CS1 | Dowlex GM8070G | 0.917 | 0.9 | ND* | 588 | 5.96 (608) | 241.6 (35044) | 4.92 |
| CS2 | Innate ST50 | 0.918 | 0.85 | ND* | 1650 | 8.74 (891) | 274.7 (39844) | 7.87 |
| CS3 | Avangard 100 | 0.914 | 1.8 | ND* | 215 | 7.42 (757) | 171.6 (24883) | 1320 |
| | HDPE1 | 0.963 | 0.6 | | | | | |
| CS4 | 40% Engage 8150 //60% PCR-HDPE1 | 0.923 | 0.56 | ND* | 491 | | 338.9 (49157.07) | 14.7 |
| CS5 | 50%Engage 8003 // 50%PCR-HDPE1 | 0.923 | 0.77 | | 405 | | 334.3 (48490.56) | 45.5 |
| CS6 | 60% PF 1140G //40% PCR-HDPE1 | 0.921 | 1.05 | | 194 | 1.97 (201) | 334.6 (48532) | 223 |
| CS7 | 80% Attane 4201G // 20% PCR-HDPE1 | 0.922 | 0.9 | | 369 | 5.12 (522) | 300.0 (43508.07) | 113 |
| IE1 | 58% Enhancerl // 42% PCR-HDPE1 | 0.924 | 0.56 | ND* | 1044 | 6.92 (706) | 337.4 (48942.09) | 61.8 |
| CS8 | 67% EnhancerA //33% PCR-HDPE1 | 0.923 | 0.53 | | 1164 | 8.24 (840) | 278.7 (40426.95) | 123 |
| IE2 | 50% Enhancer2 //50% PCR-HDPE1 | 0.922 | 0.5 | | 630 | 4.71 (480 | 409.8 (59437.10) | 110 |
| IE3 | 53% Enhancer3 //47% PCR-HDPE1 | 0.924 | 0.54 | | 774 | 5.45 (556) | 363.5 (52719.11) | 77.7 |
| CS9 | 53% EnhancerB //47% PCR-HDPE1 | 0.924 | 0.54 | | 360 | 5.96 (608) | 347.1 (50337.81) | 166 |
| IE4 | 53% Enhancer4 //47% PCR-HDPE1 | 0.924 | 0.54 | | 990 | 8.74 (891) | 349.0 (50619.01) | 59.7 |

| | | | | | | | | |
|---|---|---|---|---|---|---|---|---|
| *ND - not detected | | | | | | | | |

Inventive compositions (IE) IE1, IE2, IE3, and IE4 each provide an unexpected balance of mechanical properties (good dart, tear, and secant modulus), a low defect count, and suitable bubble stability for blown film applications. IE1-IE4 each has improved mechanical properties compared to the comparative samples (CS), and, in particular, compared to CS4, CSS, CS6, CS7, CS8, and CS9 that contain PCR. IEI-IE4 exhibit a dart impact strength from 630-1044g compared to PCR-containing CS4-CS6 and CS9 with dart impact strength 194g - 491g (CS7, CS8 contain enhancer at greater than 60 wt%, based on the total weight of the film). IE1-IE4 each has a low defect count (59.7 mm² - 110 mm²) compared to CS3, CS3 a film made from PCR Avangard 100 (defect count 1320 mm²). IE1-IE4 each contains PCR-HDPE and IE1-IE4 each unexpectedly exhibits an MI less than 1.0 g/ 10 min that results in good bubble stability for blown films
compared to stretched film based on PCR such as Avangard 100 (MI 1.8 g/10 min).

It is specifically intended that the present disclosure not be limited to the embodiments and illustrations contained herein, but include modified forms of those embodiments including portions of the embodiments and combination of elements of different embodiments as come within the scope of the following claims.

## Claims

1. A composition comprising:
(A) from 40 wt% to 70 wt% of a high density polyethylene post-consumer resin (HDPE-PCR), wherein the high density polyethylene post-consumer resin has
(i) a density from 0.950 g/cc to 0.970 g/cc; and
(ii) a melt index from 0.2 g/10 min to 2.0 g/10 min, wherein melt index (I₂) is measured in accordance with ASTM D1238, Condition 190 °C/2.16 kg; and
(B) from 60 wt% to 30 wt% of a polyethylene enhancer, wherein the polyethylene enhancer is an ethylene/C₄-C₈ α-olefin copolymer having
(i) a density from 0.880 g/cc to 0.900 g/cc,
(ii) a melt index from 0.5 g/10 min to 0.85 g/10 min, wherein melt index (I₂) is measured in accordance with ASTM D1238, Condition 190 °C/2.16 kg, and
(iii) an I₁₀/I₂ value from 5.5 to 8.0, wherein I₁₀ is measured in accordance with ASTM D1238, Condition 190 °C/10 kg and I₂ is measured in accordance with ASTM D1238, Condition 190 °C/2.16 kg; and
(C) the composition has
(1)a density from 0.910 g/cc to 0.935 g/cc, and
(2)a melt index from 0.5 g/10 min to 0.85 g/10 min, wherein melt index (I₂) is measured in accordance with ASTM D1238, Condition 190 °C/2.16 kg.

2. The composition of claim 1 wherein the composition has a limonene content less than 4 ppm, measured by headspace gas chromatography.

3. The composition of claim 1 or claim 2 wherein the high density polyethylene post-consumer resin is an ethylene/C₄-C₈ α-olefin copolymer.

4. A film comprising:
(A) from 40 wt% to 70 wt% of a post-consumer recycled high density polyethylene (PCR HDPE), wherein the high density polyethylene post-consumer resin has
(i) a density from 0.950 g/cc to 0.970 g/cc; and
(ii) a melt index from 0.2 g/10 min to 2.0 g/10 min, wherein melt index (I₂) is measured in accordance with ASTM D1238, Condition 190 °C/2.16 kg; and
(B) from 60 wt% to 30 wt% of a polyethylene enhancer, wherein the polyethylene enhancer is an ethylene/C₄-C₈ α-olefin copolymer having
(i) a density from 0.880 g/ccc to 0.900 g/cc,
(ii) a melt index from 0.5 g/10 min to 0.85 g/10 min, wherein melt index (I₂) is measured in accordance with ASTM D1238, Condition 190 °C/2.16 kg, and
(iii) an I₁₀/I₂ value from 5.5 to 8.0, wherein I₁₀ is measured in accordance with ASTM D1238, Condition 190 °C/10 kg and I₂ is measured in accordance with ASTM D1238, Condition 190 °C/2.16 kg.
(C) and the film has
(1)a density from 0.0910 g/cc to 0.935 g/cc, and
(2)a melt index from 0.5 g/10 min to 0.85 g/10 min, wherein melt index (I₂) is measured in accordance with ASTM D1238, Condition 190 °C/2.16 kg.

5. The film of claim 4 wherein the film has a limonene content less than 4ppm, measured by headspace gas chromatography.

6. The film of any of claims 4-5 wherein the film has a defect count from 50.0 mm² to 120 mm², measured in accordance with ASTM D7310-20 as described in the description.

7. The film of any of claims 4-6 wherein the film has a property selected from the group consisting of
a machine direction tear strength from 4.41 to 8.83 N (450 gf to 900 gf), measured as described in the description,
a machine direction 2% secant modulus from 310.3 to 413.7 MPa (45,000 psi to 60,000 psi), measured as described in the description,
a dart impact strength from 600 g to 1000 g, measured in accordance with ASTM D1709; and
combinations thereof.

8. The film of any of claims 4 to 7 wherein the high density polyethylene post-consumer resin is an ethylene/C₄-C₈ α-olefin copolymer.

## Patentansprüche

1. Zusammensetzung, umfassend:
(A) von 40 Gew.-% bis 70 Gew.-% ein Post-Consumer-Harz aus Polyethylen hoher Dichte (HDPE-PCR), wobei das Post-Consumer-Harz aus Polyethylen hoher Dichte aufweist
(i) eine Dichte von 0,950 g/cm³ bis 0,970 g/cm³; und
(ii) einen Schmelzindex von 0,2 g/10 min bis 2,0 g/10 min, wobei der Schmelzindex (I₂) gemäß ASTM D1238, Bedingung 190 °C/2,16 kg, gemessen wird; und
(B) von 60 Gew.-% bis 30 Gew.-% einen Polyethylen-Verbesserer, wobei der Polyethylen-Verbesserer ein Ethylen/C₄-C₈-α-Olefin-Copolymer ist, aufweisend
(i) eine Dichte von 0,880 g/cm³ bis 0,900 g/cm³,
(ii) einen Schmelzindex von 0,5 g/10 min bis 0,85 g/10 min, wobei der Schmelzindex (I₂) gemäß ASTM D1238, Bedingung 190 °C/2,16 kg, gemessen wird, und
(iii) einen I₁₀/I₂-Wert von 5,5 bis 8,0, wobei I₁₀ gemäß ASTM D1238, Bedingung 190 °C/10 kg gemessen wird und I₂ gemäß ASTM D1238, Bedingung 190 °C/2,16 kg gemessen wird; und
(C) die Zusammensetzung aufweist:
(1) eine Dichte von 0,910 g/cm³ bis 0,935 g/cm³ und
(2) einen Schmelzindex von 0,5 g/10 min bis 0,85 g/10 min, wobei der Schmelzindex (I₂) gemäß ASTM D1238, Bedingung 190 °C/2,16 kg gemessen wird.

2. Zusammensetzung nach Anspruch 1, wobei die Zusammensetzung einen Limonengehalt von weniger als 4 ppm aufweist, gemessen durch Headspace-Gaschromatographie.

3. Zusammensetzung nach Anspruch 1 oder Anspruch 2, wobei das Post-Consumer-Harz aus Polyethylen hoher Dichte ein Ethylen/C₄-C₈-α-Olefin-Copolymer ist.

4. Folie, umfassend:
(A) von 40 Gew.-% bis 70 Gew.-% ein recyceltes Post-Consumer Polyethylen mit hoher Dichte (PCR-HDPE), wobei das Post-Consumer-Harz aus Polyethylen mit hoher Dichte aufweist
(i) eine Dichte von 0,950 g/cm³ bis 0,970 g/cm³; und
(ii) einen Schmelzindex von 0,2 g/10 min bis 2,0 g/10 min, wobei der Schmelzindex (I₂) gemäß ASTM D1238, Bedingung 190 °C/2,16 kg, gemessen wird; und
(B) von 60 Gew.-% bis 30 Gew.-% einen Polyethylen-Verbesserer, wobei der Polyethylen-Verbesserer ein Ethylen/C₄-C₈-α-Olefin-Copolymer ist, aufweisend
(i) eine Dichte von 0,880 g/cm³ bis 0,900 g/cm³,
(ii) einen Schmelzindex von 0,5 g/10 min bis 0,85 g/10 min, wobei der Schmelzindex (I₂) gemäß ASTM D1238, Bedingung 190 °C/2,16 kg, gemessen wird, und
(iii) einen I₁₀/I₂-Wert von 5,5 bis 8,0, wobei I₁₀ gemäß ASTM D1238, Bedingung 190 °C/10 kg gemessen wird und I₂ gemäß ASTM D1238, Bedingung 190 °C/2,16 kg gemessen wird.
(C) und die Folie aufweist
(1) eine Dichte von 0,0910 g/cm³ bis 0,935 g/cm³ und
(2) einen Schmelzindex von 0,5 g/10 min bis 0,85 g/10 min, wobei der Schmelzindex (I₂) gemäß ASTM D1238, Bedingung 190 °C/2,16 kg gemessen wird.

5. Folie nach Anspruch 4, wobei die Folie einen Limonengehalt von weniger als 4 ppm aufweist, gemessen durch Headspace-Gaschromatographie.

6. Folie nach einem der Ansprüche 4 bis 5, wobei die Folie eine Fehlerzahl von 50,0 mm² bis 120 mm² aufweist, gemessen gemäß ASTM D7310-20, wie in der Beschreibung beschrieben.

7. Folie nach einem der Ansprüche 4 bis 6, wobei die zweite Folie eine Eigenschaft aufweist, ausgewählt aus der Gruppe, bestehend aus
einer Reißfestigkeit in Maschinenrichtung von 4,41 bis 8,83 N (450 gf bis 900 gf), gemessen wie in der Beschreibung beschrieben,
einem 2 %-Elastizitätsmodul bei Biegung in Maschinenrichtung von 310,3 bis 413,7 MPa (45.000 psi bis 60.000 psi), gemessen wie in der Beschreibung beschrieben,
eine Durchstoßfestigkeit von 600 g bis 1000 g, gemessen gemäß ASTM D1709; und
Kombinationen davon.

8. Folie nach einem der Ansprüche 4 bis 7, wobei das Post-Consumer-Harz aus Polyethylen mit hoher Dichte ein Ethylen/C₄-C₈-α-Olefin-Copolymer ist.

## Revendications

1. Composition comprenant :
(A) de 40 % en poids à 70 % en poids d'une résine de polyéthylène haute densité post-consommation (HDPE-PCR), dans laquelle la résine de polyéthylène haute densité post-consommation présente
(i) une masse volumique allant de 0,950 g/cm³ à 0,970 g/cm³ ; et
(ii) un indice de fusion allant de 0,2 g/10 min à 2,0 g/10 min, dans laquelle l'indice de fusion (I₂) est mesuré conformément à la norme ASTM D1238, condition 190 °C/2,16 kg ; et
(B) de 60 % en poids à 30 % en poids d'un agent d'amélioration de polyéthylène, dans laquelle l'agent d'amélioration de polyéthylène est un copolymère d'éthylène/α-oléfine en C₄-C₈ présentant
(i) une masse volumique allant de 0,880 g/cm³ à 0,900 g/cm³,
(ii) un indice de fusion allant de 0,5 g/10 min à 0,85 g/10 min, dans laquelle l'indice de fusion (I₂) est mesuré conformément à la norme ASTM D1238, condition 190 °C/2,16 kg, et
(iii) une valeur I₁₀/I₂ allant de 5,5 à 8,0, dans laquelle I₁₀ est mesuré conformément à la norme ASTM D1238, condition 190 °C/10 kg et I₂ est mesuré conformément à la norme ASTM D1238, condition 190 °C/2,16 kg ; et
(C) la composition présente
(1) une masse volumique allant de 0,910 g/cm³ à 0,935 g/cm³, et
(2) un indice de fusion allant de 0,5 g/10 min à 0,85 g/10 min, dans laquelle l'indice de fusion (I₂) est mesuré conformément à la norme ASTM D1238, condition 190 °C/2,16 kg.

2. Composition selon la revendication 1, dans laquelle la composition présente une teneur en limonène inférieure à 4 ppm, mesurée par chromatographie en phase gazeuse de l'espace de tête.

3. Composition selon la revendication 1 ou la revendication 2, dans laquelle la résine de polyéthylène haute densité post-consommation est un copolymère d'éthylène/α-oléfine en C₄-C₈.

4. Film comprenant :
(A) de 40 % en poids à 70 % en poids d'un polyéthylène haute densité recyclé post-consommation (PCR HDPE), dans lequel la résine de polyéthylène haute densité post-consommation présente
(i) une masse volumique allant de 0,950 g/cm³ à 0,970 g/cm³ ; et
(ii) un indice de fusion allant de 0,2 g/10 min à 2,0 g/10 min, dans lequel l'indice de fusion (I₂) est mesuré conformément à la norme ASTM D1238, condition 190 °C/2,16 kg ; et
(B) de 60 % en poids à 30 % en poids d'un agent d'amélioration de polyéthylène, dans lequel l'agent d'amélioration de polyéthylène est un copolymère d'éthylène/α-oléfine en C₄-C₈ présentant
(i) une masse volumique allant de 0,880 g/cm³ à 0,900 g/cm³,
(ii) un indice de fusion allant de 0,5 g/10 min à 0,85 g/10 min, dans lequel l'indice de fusion (I₂) est mesuré conformément à la norme ASTM D1238, condition 190 °C/2,16 kg, et
(iii) une valeur I₁₀/I₂ allant de 5,5 à 8,0, dans lequel I₁₀ est mesuré conformément à la norme ASTM D1238, condition 190 °C/10 kg et I₂ est mesuré conformément à la norme ASTM D1238, condition 190 °C/2,16 kg.
(C) et le film présente
(1) une masse volumique allant de 0,0910 g/cm³ à 0,935 g/cm³, et
(2) un indice de fusion allant de 0,5 g/10 min à 0,85 g/10 min, dans lequel l'indice de fusion (I₂) est mesuré conformément à la norme ASTM D1238, condition 190 °C/2,16 kg.

5. Film selon la revendication 4, dans lequel le film présente une teneur en limonène inférieure à 4 ppm, mesurée par chromatographie en phase gazeuse de l'espace de tête.

6. Film selon l'une quelconque des revendications 4 à 5, dans lequel le film présente un nombre de défauts allant de 50,0 mm² à 120 mm², mesuré conformément à la norme ASTM D7310-20 comme décrit dans la description.

7. Film selon l'une quelconque des revendications 4 à 6, dans lequel le film présente une propriété choisie dans le groupe constitué de
une résistance à la déchirure dans le sens machine allant de 4,41 à 8,83 N (450 gf à 900 gf), mesurée comme décrit dans la description,
un module sécant à 2 % dans le sens machine allant de 310,3 à 413,7 MPa (45 000 psi à 60 000 psi), mesuré comme décrit dans la description,
une résistance au choc à masse tombante allant de 600 g à 1 000 g, mesuré conformément à la norme ASTM D1709 ; et
des combinaisons de ceux-ci.

8. Film selon l'une quelconque des revendications 4 à 7, dans lequel la résine de polyéthylène haute densité post-consommation est un copolymère d'éthylène/α-oléfine en C₄-C₈.
